# EUROPÄISCHE PATENTANMELDUNG

(11) **EP 4 620 717 A1**
(43) Veröffentlichungstag der Anmeldung: **24.09.2025**
(21) Anmeldenummer: 25157322.6
(22) Anmeldetag: 12.02.2025
(51) Int. Cl.: B60L 3/04, B60L 3/12, B60L 5/08, B60L 9/00, H01R 39/58, H01R 41/00, B61B 12/00, B61B 13/08, H02K 5/14, H02K 11/21, B60M 1/12, G01N 27/20

(54) **KOHLEVERSCHLEISSTESTER UND SCHLEIFLEITUNG MIT KOHLEVERSCHLEISSTESTER**

(30) Priorität: 19.03.2024 DE 102024107807
(71) Anmelder: Paul Vahle GmbH & Co. KG, 59174 Kamen (DE)
(72) Erfinder: Ruocco, Ricardo, 44329 Dortmund (DE); Mikus, Tobias, 59192 Bergkamen (DE)
(74) Vertreter: Lenzing Gerber Stute

(57) **Zusammenfassung**

Kohleverschleißtester zum Testen und/oder Überwachen eines Verschleißgrades von zumindest einer Schleifkohle (3a) eines Stromabnehmers (3), wobei der Kohleverschleißtester an einer Schleifleitung angeordnet oder anordenbar ist, wobei der Kohleverschleißtester mindestens ein Auslöseelement (2) und zumindest einen Signalgeber aufweist, dadurch gekennzeichnet, dass das mindestens eine Auslöseelement (2) relativ zur Schleifleitung verstellbar angeordnet oder anordenbar ist, wobei der Signalgeber (4a) die Verstellung des mindestens einen Auslöseelements (2) erfasst, und dass das Auslöseelement (2) und der Signalgeber (4a) miteinander in Verbindung sind.

## Beschreibung

Kohleverschleißtester zum Testen und/oder Überwachen eines Verschleißgrades von zumindest einer Schleifkohle eines Stromabnehmers, wobei der Kohleverschleißtester an einer Schleifleitung angeordnet oder anordenbar ist, wobei der Kohleverschleißtester mindestens ein Auslöseelement und zumindest einen Signalgeber aufweist. Die Erfindung betrifft außerdem eine Schleifleitung und ein Schleifleitungssystem mit einem solchen Kohleverschleißtester.

Die Schleifkohlen eines Stromabnehmers unterliegen beim Schleifen entlang einer Schleifleitung einem Verschleiß. Ab einem bestimmten Verschleißgrad müssen die Schleifkohlen deshalb gewechselt bzw. ersetzt werden. Der Verschleiß unterliegt dabei Schwankungen und kann nicht immer genau vorhergesagt werden. Außerdem ist ein Stillstand der Anlage, beispielsweise um die Schleifkohle manuell zu überprüfen, zeitaufwändig und somit teuer. Es besteht deshalb grundsätzlich ein Bedarf an Schleifkohletestern, mit denen der Verschleißgrad der Schleifkohle eines Stromabnehmers während des Betriebs überwacht werden kann.

Kohleverschleißtester zum Testen und/oder Überwachen des Verschleißgrades von Schleifkohlen eines Stromabnehmers sind in unterschiedlichen Formen bekannt und am Markt erhältlich. Die bekannten Schleifkohletester weisen jedoch verschiedenste Nachteile unter anderem hinsichtlich des Platzbedarfs, der Zuverlässigkeit und/oder der Flexibilität auf.

Es ist deshalb die Aufgabe der vorliegenden Erfindung, einen verbesserten Schleifkohletester bereitzustellen, der insbesondere extrem kompakt ist und einen somit äußerst geringen Platzbedarf aufweist.

Diese Aufgabe wird mit einem Kohleverschleißtester mit den Merkmalen des Anspruchs 1 dadurch gelöst, dass das mindestens eine Auslöseelement relativ zur Schleifleitung verstellbar angeordnet oder anordenbar ist, wobei der Signalgeber die Verstellung des mindestens einen Auslöseelements erfasst, und dass das Auslöseelement und der Signalgeber miteinander in Verbindung sind.

Das Auslöseelement kann beispielsweise senkrecht zur Schleiffläche der Schleifleitung verstellbar direkt oder indirekt, beispielsweise über ein Zwischenstück wie eine Halterung oder eine Verkleidung, an der Schleifleitung angeordnet sein. Das Auslöseelement kann dann als Auslöser für den Signalgeber wirken und beispielsweise von einem Stromabnehmer oder einem Schleifkohlehalter beim Vorbeifahren betätigt werden. Verläuft die Schleifrichtung entlang der Schleifleitung beispielsweise horizontal, so kann das Auslöseelement beispielsweise in vertikaler Richtung verstellbar an der Schleifleitung angeordnet sein. Der Verschiebeweg des Auslöseelements kann dabei beispielsweise lediglich einige wenige Millimeter oder auch weniger als ein Millimeter betragen. Es reicht aus, wenn das Auslöseelement um den Betrag des Schaltwegs des Signalgebers verschieblich ist, so dass der Signalgeber ausgelöst werden kann.

Ein Stromabnehmer weist in der Regel einen Schleifkohlenhalter für eine Schleifkohle auf. Der Kohleverschleißtester wird erfindungsgemäß so an der Schleifleitung angeordnet, dass ein Stromabnehmer mit einer wenig oder gar nicht abgenutzten Schleifkohle den Kohleverschleißtester passiert, ohne dass das Auslöseelement betätigt wird. Die Schleifkohlen eines Stromabnehmers sind in der Regel gegen die Schleiffläche kraftbeaufschlagt, so dass sich der Schleifkohlehalter mit fortschreitenden Abnutzungsgrad der Schleifkohle immer weiter an die Schleifleitung annähert. Der erfindungsgemäße Kohleverschleißtester wird bzw. ist so an der Schleifleitung angeordnet, dass beispielsweise der Schleifkohlehalter oder ein daran angeordnetes weiteres Bauteil das Auslöseelement ab einem bestimmten Abnutzungsgrad, beispielsweise an einer dafür vorgesehenen Anschlagsfläche berührt und verstellt.

Dadurch, dass der Signalgeber mit dem Auslöseelement in Verbindung ist, wird er beim Verstellen des Auslöseelements mitbewegt. Der Signalgeber kann so ausgelegt werden, dass er dadurch betätigt wird und ein Signal generiert bzw. aussendet. Auf diese Weise signalisiert der Kohleverschleißtester, dass die Schleifkohle einen bestimmten Abnutzungsgrad erreicht hat.

Bei einer mehrpoligen Schleifleitung kann für jeden oder auch nur für bestimmte Pole jeweils ein Kohleverschleißtester an der Schleifleitung angeordnet werden. Forteilhaft sind diese entlang der Schleifleitung nebeneinander angeordnet. Sollte der Platz nicht ausreichen, so können die mehreren Kohleverschleißtester auch versetzt oder hintereinander angeordnet werden.

Bei der Wahl eines entsprechend kompakten Signalgebers kann der Kohleverschleißtester auf diese Weise extrem kompakt und somit platzsparend ausgestaltet werden.

Weitere Vorteile ergeben sich aus den Unteransprüchen.

Bei einer Ausführungsform ist das Auslöseelement starr mit dem Signalgeber verbunden. Der Signalgeber wird dann bei der Verstellung bzw. dem Betätigen des Auslöseelements um denselben Betrag mitbewegt. Auf diese Weise kann der Schaltweg des Signalgebers sehr genau eingestellt werden und/oder der Verschleißgrad kann sehr präzise gemessen werden.

Bei einer bevorzugten Ausführungsform wirkt der Signalgeber mechanisch und/oder elektro-magnetisch und sendet bei seiner Betätigung ein Signal an eine Elektronik, einen Sensor und/oder eine Datenverarbeitung.

Wenn der Signalgeber mechanisch wirkt, kann beispielsweise ein Stromkreis bei der Betätigung geschlossen oder geöffnet werden, so dass ein Signal ausgesendet und detektiert werden kann. Der Signalgeber kann aber beispielsweise auch induktiv bzw. magnetisch wirken, beispielsweise in Form einer Spule, die einen Strom induziert, wenn Sie in die Nähe einer anderen Spule gebracht wird. Entscheidend ist, dass der Signalgeber bei seiner Betätigung ein Signal aussenden kann. Das Signal kann beispielsweise elektrisch sein. Es sind aber auch optische, akustische oder Funksignale denkbar. Das Signal kann von einer Elektronik, einem Sensor und/oder einer Datenverarbeitung registriert und einem Benutzer angezeigt werden, so dass der Benutzer erkennt, dass der Signalgeber betätigt wurde.

In einer besonders bevorzugten Ausführungsform ist der Signalgeber ein Schalter oder ein Taster, der zumindest zwei gelenkig und in einem Winkel zueinander angeordnete Flügel und eine Rückstellfeder aufweist, wobei die Rückstellfeder die zwei Flügel miteinander verbindet.

Die beiden Flügel sind jeweils gelenkig über einer Aufhängung an dem Signalgeber gelagert und durch die Rückstellfeder miteinander verbunden. In einer neutralen Position weisen die beiden Flügel in einem Winkel von dem Signalgeber weg und werden durch die Rückstellfeder in dieser Position gehalten. Dadurch, dass der Signalgeber mit dem Auslöseelement verbunden ist, kann der Taster das Auslöseelement des Schleifkohletesters ebenfalls in Position halten, beispielsweise indem der Taster das Auslöseelement von einer Anschlagfläche weg hin zur Schleifleitung drückt. Somit ist das Auslöseelement durch den Taster in einer neutralen, also in einer nicht-betätigten Position gehalten.

Wird das Auslöseelement beispielsweise durch einen Stromabnehmer verstellt bzw. ausgelöst, kann die Federkraft der Rückstellfeder überwunden werden. Die beiden Flügel können dann beispielsweise gespreizt werden, so dass der Taster ausgelöst wird. Sobald der Stromabnehmer weitergefahren ist, kann die Rückstellfeder die Flügel und somit das Auslöseelement wieder in ihre neutrale Position zurückverstellen. Mit einem derartigen Taster können extrem kurze Schaltwege und damit ein äußerst platzsparender Aufbau realisiert werden.

Bei einem derartigen Taster kann zusätzlich zu dem Schaltweg eine Toleranz vorgesehen sein, so dass nach dem Spreizen der Flügel und dem Überwinden des Schaltwegs noch nicht sofort ausgelöst wird oder dass nach dem Auslösen noch etwas zusätzliches Spiel vorgesehen ist. Dadurch kann beispielsweise ein Toleranzbereich für den Abnutzungsgrad der Schleifkohle vorgesehen sein und/oder detektiert werden.

Bei einer weiteren Ausführungsform ist der Signalgeber zusammen mit einer Elektronik auf einer Platine angeordnet, wobei die Platine an dem Auslöseelement angeordnet bzw. anordbar ist. Der Signalgeber kann direkt auf die

Platine gelötet oder auf diese aufgesteckt sein.

Die Platine kann beispielsweise mittels an dem Auslöseelement angeordneten Haltemitteln an dem Auslöseelement gehalten oder befestigt sein. Derartige Haltemittel können Haltenasen, Klemm- oder Rastmittel oder auch Schraub- oder Steckverbindungen sein.

Bei einer besonders bevorzugten Ausführungsform weist das Auslöseelement eine Aufnahme zur Aufnahme bzw. zum Umgreifen der Schleifleitung auf. Dadurch kann das Auslöseelement direkt an der Schleifleitung angeordnet werden, indem die Schleifleitung in die Aufnahme des Auslöseelements eingeführt wird.

Bei dieser Ausführungsform kann die Aufnahme eine Innenkontur aufweisen, die zumindest abschnittsweise einer Außenkontur der Schleifleitung entspricht. Beispielsweise kann die Innenkontur der Aufnahme einen im Wesentlichen rechteckigen Querschnitt aufweisen, in die der ebenfalls rechteckiger Querschnitt der Außenkontur der Schleifleitung hineinpasst. Damit das Auslöseelement relativ zur Schleifleitung verschieblich ist, muss die Aufnahme in zumindest eine Richtung gegenüber der Schleifleitung etwas Spiel aufweisen.

Bei einer weiteren Ausführungsform kann die Aufnahme einen im Wesentlichen U-förmigen Querschnitt aufweisen, derart, dass das Auslöseelement die Schleifleitung zumindest teilweise umgreift, wobei eine Schleiffläche der Schleifleitung frei bleibt.

Das Auslöseelement kann die Schleifleitung beispielsweise von unten umgreifen und eine obere schlitzartige Öffnung aufweisen, die mit der Schleiffläche der Schleifleitung korrespondiert. Das Auslöseelement kann die Schleifleitung dann von unten umklammern, wobei die Schleifkohle weiterhin entlang der Schleiffläche schleifen kann und dabei durch die schlitzartige Öffnung des Auslöseelements hindurch fährt. Diese Anordnung trägt weiter zu der extremen Kompaktheit des Kohleverschleißtesters bei.

Bei einer weiteren Ausführungsform kann die Innenkontur der Aufnahme gerade Seitenwandungen aufweisen, wobei die geraden Seitenwandungen Gleitflächen für die Außenkontur der Schleifleitung bilden. Das Auslöseelement kann dann zur Betätigung des Signalgebers entlang der Gleitflächen relativ zur Schleifleitung, wenn das Auslöseelement durch den Stromabnehmer verstellt wird. Die Bewegung des Auslösselement ist dann durch die Gleitflächen entlang der Außenkontur der Schleifleitung geführt.

Bei einer weiteren Ausführungsform ist das Auslöseelement an eine Schleifleitung anklipsbar, anklemmbar, aufsteckbar oder anschraubbar und/oder senkrecht zur Schleiffläche der Schleifkohle verschieblich an einer Schleifleitung anlagerbar bzw. angelagert. Bei dieser Ausführungsform kann das Auslöseelement so ausgestaltet sein, dass er nachträglich an einer existierenden Schleifleitung anordenbar ist. Das macht den Schleifkohletester äußerst flexibel und in bestehende unterschiedliche Schleifleitungssysteme integrierbar.

Bei einer weiteren bevorzugten Ausführungsform weist das Auslöseelement Anschlagsflächen für den Stromabnehmer oder einen Schleifkohlehalter oder eine an dem Stromabnehmer angeordnete Anschlagsfläche auf. Die Anschlagsfläche kommt bei dieser Ausführungsform beispielsweise mit dem Stromabnehmer oder einer korrespondierenden Anschlagsfläche in Kontakt, wenn die Schleifkohle einen bestimmten Abnutzungsgrad erreicht und sich der Stromabnehmer bzw. der Schleifkohlenhalter bzw. die Anschlagfläche entsprechend abgesenkt hat. Das Auslöseelement wird dadurch verschoben und der Signalgeber wird betätigt.

Bei dieser Ausführungsform können die Anschlagflächen des Auslöseelements über die Schleifleitung hinausragen, derart, dass sie in Richtung des Stromabnehmers vorstehen. Abhängig davon, wie weit die Anschlagflächen über die Schleifleitung hinausragen, kann eingestellt werden, bei welchem Verschleißgrad der Kohleverschleißtester auslöst und ein Signal ausgibt.

Bei einer weiteren Ausführungsform weist der Kohleverschleißtester eine Anschlagsfläche für den Signalgeber auf, wobei der Signalgeber zwischen dem Auslöseelement und der Anschlagsfläche angeordnet ist. Die Anschlagsfläche kann beispielsweise eine zusätzliche Platte sein, gegen die der Signalgeber beim Verschieben des Auslöseelements gedrückt wird. Die Platte kann beispielsweise unterhalb der Schleifleitung angeordnet sein.

Es ist aber grundsätzlich auch möglich, dass der Signalgeber zum Betätigen gegen eine vorhandene Struktur, wie beispielsweise einen Stahlträger oder ein Gerüst oder eine Verkleidung der Schleifleitung, gedrückt wird. Ist die Anschlagsfläche jedoch durch ein gesondertes Bauteil wie beispielsweise eine Platte gebildet, ist der Schleifkohletester besonders flexibel an verschiedenen Stellen der Schleifleitung anordenbar, ohne dass eine vorhandene Struktur als Anschlagsfläche berücksichtigt werden muss.

Bei dieser Ausführungsform kann die Anschlagsfläche zumindest ein Halteelement aufweisen oder mit zumindest einem Halteelement verbindbar sein, mit dem die Anschlagsfläche mit der Schleifleitung verbunden oder verbindbar ist. Die Anschlagsfläche kann beispielsweise durch eine Platte gebildet sein, die mit zwei Klemmen verschraubt ist oder diese aufweist, mit denen die Platte an der Schleifleitung festklemmbar ist. Es sind jedoch auch andere Halteelemente wie Schraub-, Steck-, Rast- oder Klebverbindungen denkbar.

Besonders vorteilhaft ist die Anschlagsfläche lösbar mit der Schleifleitung verbindbar, so dass sie bei Bedarf, beispielsweise zur Wartung, abgenommen werden kann und den Zugriff auf den Signalgeber ermöglicht.

Bei einer weiteren Ausführungsform liegt an einem Anschluss des Kohleverschleißtesters eine Ausgangspannung an, wenn der Signalgeber in einer neutralen Position ist, wobei die Ausgangsspannung absinkt, wenn der Signalgeber betätigt wird.

Mit dieser Ausführungsform können Kabelbrüche oder andere Defekte detektiert werden, da der Kohleverschleißtester ein Signal abgibt, sobald die Ausgangsspannung absinkt bzw. sobald keine Ausgangsspannung anliegt. Im umgekehrten Fall, das heißt wenn die Ausgangsspannung bei Betätigung des Signalgebers ansteigen würde, bestünde die Gefahr, dass eine abgenutzte Schleifkohle unentdeckt bliebe, wenn beispielsweise ein Defekt bei der Spannungsversorgung und/oder ein Kabelbruch vorliegt. Das ist bei dieser Ausführungsform ausgeschlossen.

Die Erfindung betrifft auch eine Schleifleitung mit einem vorbeschriebenen Kohleverschleißtester.

Bei einer Ausführungsform weist die Schleifleitung zumindest zwei Schleifleitungsabschnitte mit jeweils einem Ende auf, wobei die Enden sich gegenüberliegend und miteinander fluchtend in einem gemeinsamen Auslöseelement angeordnet sind.

Bei dieser Ausführungsform können zwei Enden einer Schleifleitung mittels des Kohleverschleißtesters miteinander verbunden werden. Es können auf diese Weise auch Schleifleitungsabschnitte besonders einfach vormontiert und in bestehende Schleifleitungen eingesetzt werden.

Bei einer weiteren Ausführungsform können sich die beiden Enden der Schleifleitungsabschnitte in dem Auslösselement relativ zueinander entlang ihrer Längsrichtung ausdehnen und/oder kontrahieren.

Die beiden in dem Auslöseelement angeordneten Enden der Schleifleitungsabschnitte können beispielsweise in Längsrichtung verschieblich in dem Auslöseelement gelagert sein. Wenn sich die Schleifleitungsabschnitte beispielsweise auf Grund von Temperaturschwankungen ausdehnen oder zusammenziehen, ändert sich der Abstand der beiden gegenüberliegenden Enden zueinander. Trotzdem bleiben die beiden Enden über das Auslöseelement miteinander verbunden. Der Kohleverschleißtester ist auf diese Weise gleichzeitig ein Dehnverbinder für Schleifleitungen.

Die Erfindung betrifft auch ein Schleifleitungssystem mit zumindest einer erfindungsgemäßen Schleifleitung bzw. einem erfindungsgemäßen Kohleverschleißtester und mit zumindest einem Stromabnehmer.

Bei einer Ausführungsform des Schleifleitungssystems weist der Stromabnehmer einen Schleifkohlehalter auf, wobei der Schleifkohlehalter eine Anschlagsfläche zur Betätigung des Kohleverschleißtesters aufweist. Die Anschlagsfläche kann beispielsweise mit einer korrespondierenden Anschlagsfläche des Auslöseelements zusammenwirken. Die Anschlagsflächen können derart aufeinander abgestimmt und voneinander beabstandet sein, dass ein bestimmter zulässiger Abnutzungsgrad der Schleifkohle so eingestellt ist, dass der Kohleverschleißtester ein Signal ausgibt, sobald dieser bestimmte Abnutzungsgrad erreicht oder überschritten wird.

Bei einer besonders bevorzugten Ausführungsform des erfindungsgemäßen Schleifleitungssystems ist die Anschlagsfläche des Schleifkohlehalters von einer Anschlagsfläche des Kohleverschleißtesters entfernt, wenn die Schleifkohle einen bestimmten Verschleißgrad noch nicht erreicht hat, und die Anschlagsfläche des Schleifkohlenhalters kommt mit der Anschlagsfläche des Kohleverschleißtesters in Kontakt, wenn die Schleifkohle einen bestimmten Abnutzungsgrad überschreitet.

Über die Anordnung der Anschlagsflächen, die Form des Auslöseelements und die Länge des Schaltweges kann der zulässige Abnutzungsgrad der Schleifkohle eingestellt werden.

Bei einer weiteren bevorzugten Ausführungsform weist das Schleifleitungssystem mehr als eine Schleifleitung auf, wobei an mehr als einer Schleifleitung ein Auslöseelement angeordnet ist. Es können beispielsweise an jeder Schleifleitung ein Auslöseelement angeordnet sein, so dass alle Schleifkohlen eines Stromabnehmers gleichzeitig und unabhängig voneinander überwacht bzw. getestet werden können.

Nachfolgend wird die Erfindung anhand eines Ausführungsbeispiels näher erläutert. Die Erfindung ist selbstverständlich nicht auf dieses Ausführungsbeispiel beschränkt.

Es zeigen:
- Figur 1: eine Explosionsdarstellung eines Ausschnitts eines erfindungsgemäßen Schleifleitungssystems;
- Figur 2a: eine Seitenansicht eines erfindungsgemäßen Kohleverschleißtesters mit einem Stromabnehmer mit Schleifkohle mit einem geringen Abnutzungsgrad;
- Figur 2b: eine Seitenansicht des gleichen Kohleverschleißtesters wie in Figur 2a mit einem Stromabnehmer mit einer Schleifkohle mit einem höheren Abnutzungsgrad als in Figur 2a;
- Figur 3a: einen Querschnitt durch den Kohleverschleißtester von Figur 2a;
- Figur 3b: einen Querschnitt durch den Kohleverschleißtester von Figur 2b;
- Figur 4a: eine Seitenansicht eines erfindungsgemäßen Kohleverschleißtesters;
- Figur 4b: eine Draufsicht auf einen erfindungsgemäßen Kohleverschleißtesters;
- Figur 4c: eine Unteransicht eines erfindungsgemäßen Kohleverschleißtesters;
- Figur 5: ein Beispiel für die Elektronik einer Platine eines Kohleverschleißtesters.

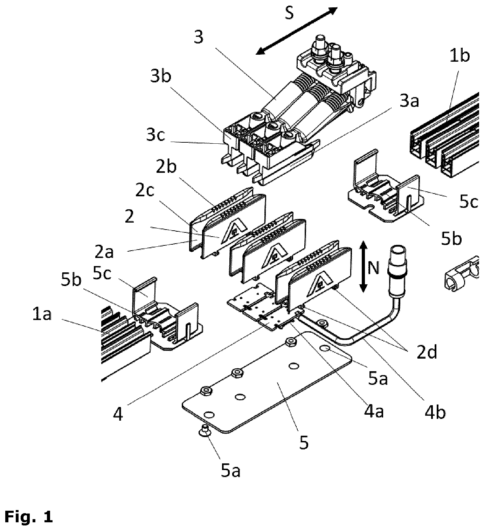

Figur 1 zeigt eine Explosionsdarstellung eines erfindungsgemäßen Schleifleitungssystems mit einem erfindungsgemäßen Kohleverschleißtester. Das Schleifleitungssystem weist eine Schleifleitung mit einem ersten und einem zweiten Schleifleitungsabschnitt 1a, 1b auf. Die Enden der beiden Schleifleitungsabschnitte 1a, 1b sind in eine Aufnahme 2a eines Auslöseelements 2 des Kohleverschleißtesters einsteckbar. In der Figur 1 sind drei grundsätzlich baugleiche Schleifleitungen mit jeweils einem Stromabnehmer 3 dargestellt. Die Schleifleitungsabschnitte 1a, 1b sind jeweils in ein Auslöseelement 2 einsteckbar. Der Übersichtlichkeit halber sind die entsprechenden Bereiche der dargestellten Komponenten mit den gleichen Bezugszeichen versehen.

Selbstverständlich können auch mehr oder weniger parallele Schleifleitungen mit einem erfindungsgemäßen Kohleverschleißtester versehen sein. Es können insbesondere auch mehrere Schleifleitungen für verschiedene Phasen und zusätzlich ein PE-Leiter vorgesehen sein. Auch kann ein erfindungsgemäßer Kohleverschleißtester auf eine durchgehende Schleifleitung statt auf zwei gegenüberliegende Schleifleitungsabschnitte 1a, 1b gesteckt bzw. geschoben werden. Die gezeigte Anordnung mit zwei Schleifleitungsabschnitten 1a, 1b kann jedoch eine vereinfachte Montage ermöglichen.

Die Innenkontur der Aufnahme 2a das Auslöseelement 2 entspricht im Wesentlichen der Außenkontur der Schleifleitungen, wobei die Innenkontur der Aufnahmen 2a gerade Seitenwandungen 2c aufweist, welche länger sind als die Seitenwandungen des Außenprofils der Schleifleitungen. Die Seitenwandungen 2c dienen somit als Gleitflächen, an denen das Auslöseelement 2 orthogonal zur Schleifrichtung S der Stromabnehmer 3 also in Richtung N gleiten kann.

Die in der Figur 1 oberen Enden das Auslöseelement 2 weisen Anschlagsflächen 2b auf. In dem gezeigten Ausführungsbeispiel weisen die Anschlagsflächen 2b ein konturiertes Profil auf. Das konturierte Profil ist aus mehreren periodisch angeordneten Ausnehmungen gebildet und hat sich als vorteilhaft hinsichtlich des Verschleißes der Anschlagflächen 2b herausgestellt.

In der Figur 1 unterhalb der Auslöseelemente 2 ist jeweils eine Platine 4 dargestellt. Auf den Platinen 4 ist jeweils ein Signalgeber in Form eines Tasters 4a und die dazugehörige Steuer- bzw. Signalelektronik angeordnet. Die Platinen 4 sind über eine Leitung 4b verbunden. Über die Leitung 4b werden die Platinen mit einer Spannung versorgt und das ausgegebene Signal wird an eine Elektronik und/oder eine nicht dargestellte Datenverarbeitung gesendet.

Die Platinen 4 mit den Tastern 4a werden direkt an den Auslöseelementen 2 angeordnet. In dem gezeigten Ausführungsbeispiel weisen die Auslöseelemente 2 dafür Haltenasen 2d auf, die eine Aufnahme für die Platine bilden. Die Platinen 4 können in der Aufnahme entweder befestigt, beispielsweise verklebt oder verschraubt, oder auch nur eingeschoben bzw. eingesteckt sein. Selbstverständlich sind auch andere Aufnahmen und/oder Befestigungen denkbar, wie beispielsweise ein Klemmmechanismus, eine Steckverbindung und/oder eine Rastverbindung. Entscheidend ist, dass der Signalgeber extrem platzsparend und kompakt an dem Auslöseelement 2 angeordnet werden und mit diesem mitbewegt werden kann.

In der Figur 1 ist unterhalb der Platinen 4 eine Anschlagsfläche in Form einer Platte 5 für die Taster 4a angeordnet. Die Platte 5 ist mittels Schrauben 5a und/oder Nieten mit Halteelementen 5b verbindbar. Die Haltelemente 5b weisen Klemmmittel 5c auf, mit denen die Haltemittel 5b und somit die Platte 5 mit den Schleifleitungen verbunden werden kann. Die Platte 5 ist anschließend relativ zu den Schleifleitungen, insbesondere in Richtung N, unbeweglich. Durch die Klemmmittel 5c ist die Verbindung mit den Schleifleitungen bei Bedarf lösbar. In montiertem Zustand sind die Taster 4a zwischen der Platine 4 und der Platte 5 angeordnet. Die Platte 5 bildet durch ihre Befestigung an den Schleifleitungen eine Anschlagfläche für die Taster 4a.

Die Stromabnehmer 3 sind an einem nicht dargestellten Stromabnehmerwagen angeordnet und weisen jeweils eine Schleifkohle 3a auf. Die Schleifkohlen 3a sind in einem Schleifkohlehalter 3b gehaltert. Der Schleifkohlehalter 3c weist eine Anschlagsfläche 3c auf. Sobald die Schleifkohle 3a einen bestimmten Verschleißgrad erreicht hat, kommt die Anschlagsfläche 3c mit den korrespondierenden Anschlagsflächen 2b das Auslöseelement 2 in Kontakt, so dass die Taster 4a schließlich betätigt werden. Die Funktionsweise wird nachfolgend näher erläutert.

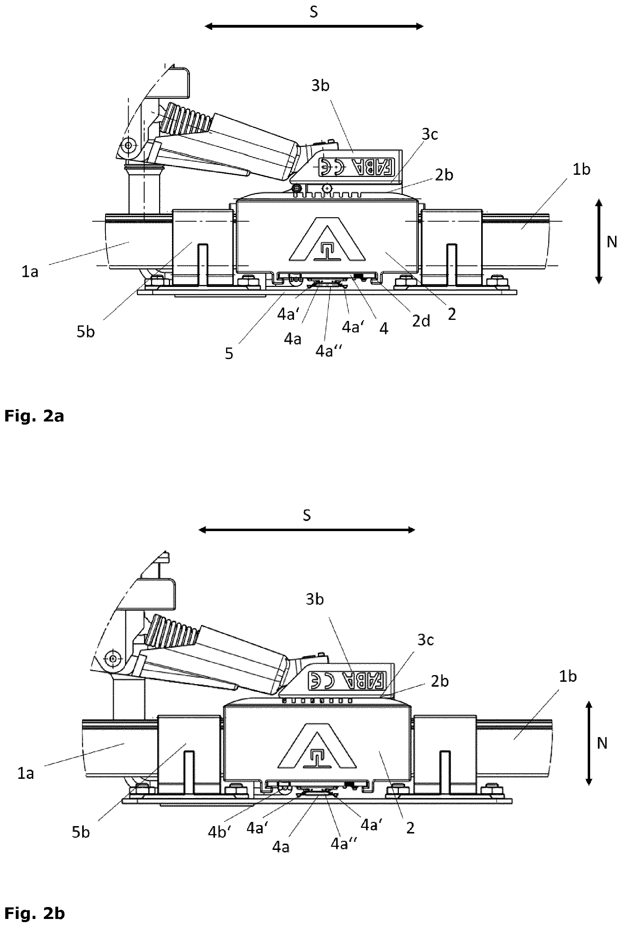

Die Figur 2a zeigt den Kohleverschleißtester im montierten Zustand in einer Seitenansicht. Die Schleifleitungsabschnitte 1a, 1b sind in die Aufnahmen das Auslöseelement 2 eingeschoben. Die Platte 5 ist mittels der Haltemittel 5b an der Schleifleitung befestigt und bildet eine Anschlagfläche für den Taster 4a.

Der Taster 4a ist auf der Platine 4 angeordnet. Die Platine 4 ist durch die Haltenasen 2d direkt am Auslöseelement 2 gehalten und relativ zum Auslöseelement 2 unbeweglich. Der Taster 4a weist zwei Flügel 4a' auf, die in einem Winkel zueinander angeordnet sind. Zwischen den Flügeln 4a' ist eine Spannfeder 4a" angeordnet, welche die Flügel 4a' und somit das Auslöseelement 2 in der gezeigten Position hält.

Die Anschlagflächen 2b des Auslöseelements 2 überragen die im Bild obere Kante der Schleifleitungen. Die Schleifkohlen 3a der Stromabnehmer 3 sind in der Figur innerhalb der Schleifleitungen angeordnet und in Kontakt mit deren Leiterbahnen. Der Stromabnehmer 3 fährt entlang der Schleifleitung in Schleifrichtung S. Die Schleifkohle 3a hat in der Figur einen bestimmten Verschleißgrad noch nicht erreicht, so dass die Anschlagsfläche 3c des Schleifkohlehalters 3b beim Passieren des Stromabnehmers 3 die Anschlagsfläche 2b des Auslöseelements 2 nicht berührt. In dieser Konfiguration verbleibt das Auslöseelement 2 beim Passieren des Stromabnehmers 3 folglich in der gezeigten Position. Der Taster 2a wird somit nicht betätigt und der Kohleverschleißtester gibt kein Signal aus.

Die Figur 2b zeigt den gleichen Kohleverschleißtester wie die Figur 2a, jedoch weist die Schleifkohle 3a in Figur 2b einen höheren Verschleißgrad auf als in Figur 2b. Dementsprechend hat sich der Schleifkohlenhalter 3b abgesenkt. Die Anschlagsfläche 3c des Schleifkohlehalters 3b befindet sich nun auf der gleichen Höhe wie die Anschlagsfläche 2b des Auslöseelements 2. Die Schleifkohle 2b ist jedoch noch nicht so weit verschlissen, dass das Auslöseelement 2 in Richtung N zur Platte 5 gedrückt wird. Der Taster 4a mit den Flügeln 4a' und der Spannfeder 4a" befinden sich in der gleichen Position wie in Figur 2a. Wenn die Schleifkohle 3a im weiteren Betrieb weiter verschleißt, drückt die Anschlagsfläche 3c des Schleifkohlenhalters 3b das Auslöseelement 2 entlang der Richtung N hin zur Platte 5. Die beiden Flügel 4a' werden gegen die Federkraft der Spannfeder 4a" auseinander gedrückt, so dass sich der Winkel zwischen den beiden Flügeln 4a' aufweitet. Durch die Länge der Flügel 4' und deren Winkel zueinander ist der Schaltweg des Tasters 4a definiert. Sobald der Schaltweg des Tasters 4a bei einem bestimmten Verschleißgrad der Schleifkohle 3a überschritten wird, löst der Taster 4a ein Signal aus, welches über die Elektronik der Platine 4 und die nicht dargestellte Leitung 4b an eine Elektronik oder eine Datenverarbeitung weitergeleitet wird. Auf diese Weise kann einem Benutzer angezeigt werden, dass die Schleifkohle eines Stromabnehmers einen bestimmten Verschleißgrad erreicht hat.

Die Leitung 4b ist in dem gezeigten Ausführungsbeispiel an den Anschluss 4b' der Platine 4 angelötet. Selbstverständlich sind auch andere Anschlüsse denkbar, wie beispielsweise Klemmverbindungen oder Stecker und/oder ein Anschluss mit Zugentlastung.

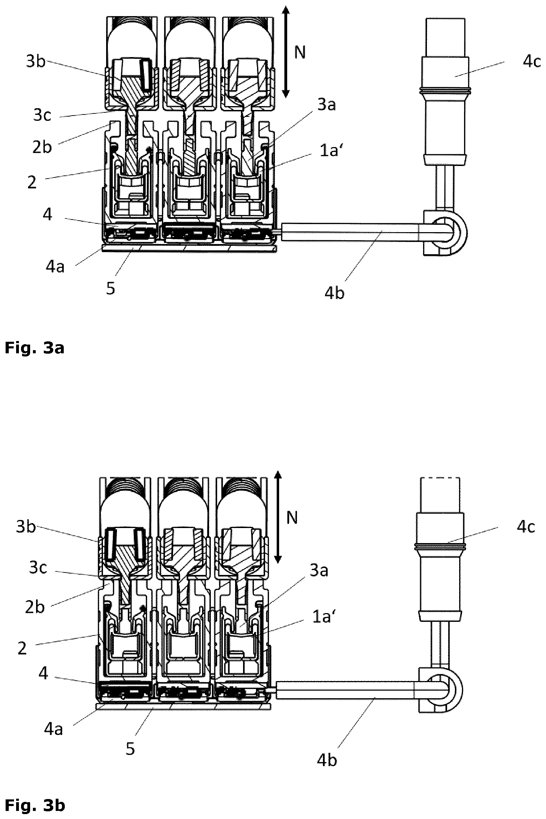

Die Figur 3a zeigt einen Querschnitt durch den Kohleverschleißtester von Figur 2a. Die Schleifkohle 3a weist einen geringen Verschleißgrad auf und ist mit den Schleifleitungsprofilen 1a' der Schleifleitung 1a in Kontakt. Die Anschlagsfläche 3c des Schleifkohlenhalters 3b ist nicht mit der Anschlagsfläche 2b des Auslöseelements 2 in Kontakt. Der Taster 4a ist folglich in seiner neutralen Position zwischen der Platine 4 und der Platte 5.

Mit steigendem Verschleißgrad der Schleifkohle 3a nähern sich die Anschlagsflächen 3c und 2b immer weiter einander an, bis die Anschlagsflächen 3c, 2b schließlich ab einem bestimmten Verschleißgrad der Schleifkohlen 3a miteinander in Kontakt kommen, so wie es in Figur 3b dargestellt ist.

Die Figur 3b zeigt einen Querschnitt durch den Kohleverschleißtester analog zur Figur 2b. Die Schleifkohlen 3a weisen einen deutlich höheren Verschleißgrad als in Figur 3a auf. Die Anschlagsflächen 3c, 2b sind miteinander in Kontakt. Bei fortschreitendem Verschleiß werden die Auslöseelemente 3 in Richtung N hin zur Platte 5 gedrückt und die Taster 4a werden betätigt. Dadurch wird ein Signal über die Leitung 4b ausgegeben. Der Stecker 4c steht symbolisch für den Anschluss an eine nicht dargestellte Elektronik und/oder eine nicht dargestellte Datenverarbeitung.

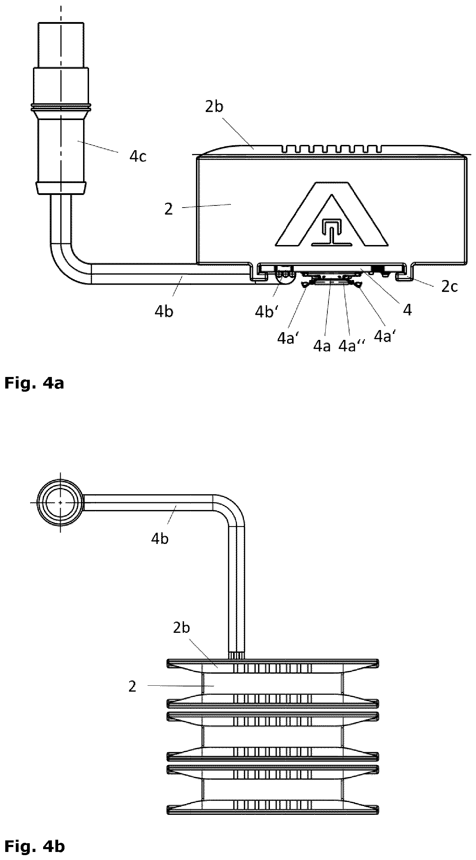

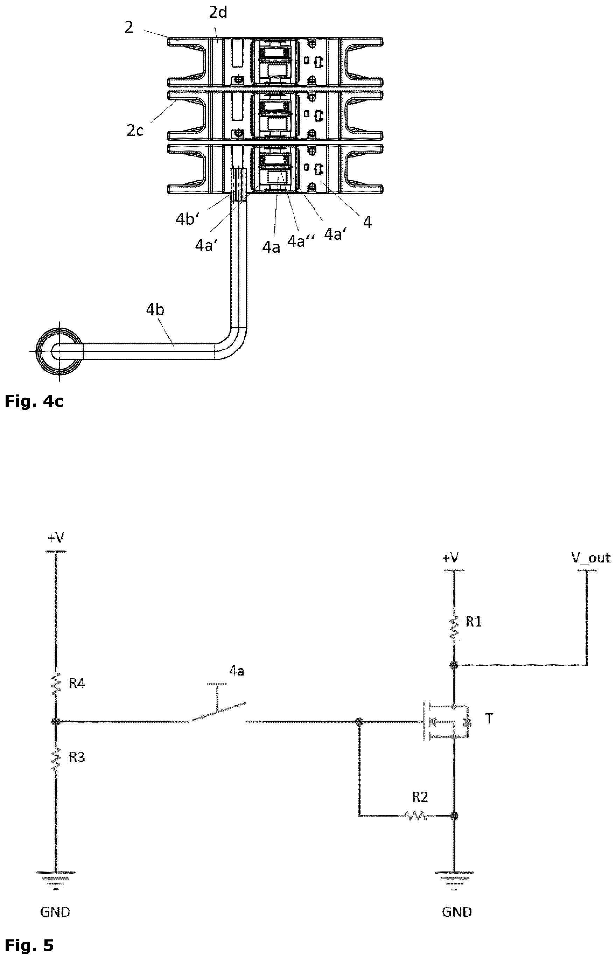

Die Figur 4a zeigt eine Seitenansicht auf einen Schleifkohletester ohne Schleifleitung. Der Taster 4a mit den beiden Flügeln 4a' und der Spannfeder 4a" befinden sich in ihrer neutralen Position. Die Figur 4b zeigt den gleichen Kohleverschleißtester wie Figur 4a in einer Draufsicht. Die Figur 4c zeigt den gleichen Kohleverschleißtester in einer Unteransicht.

Die Figur 5 zeigt ein Beispiel für die auf der Platine 4 angeordnete Elektronik. Selbstverständlich sind auch andere Schaltungen und Variationen der gezeigten Schaltung möglich.

Der im Ausführungsbeispiel verwendete Taster 4a hat eine niedrige Nennspannung von wenigen Volt, wie beispielsweise 5V. Die an der Platine anliegende Eingangsspannung +V, von beispielsweise 15-35V, insbesondere von 24V, wird deshalb durch den Spannungsteiler R3, R4 minimiert. Um beispielsweise einen Kabelbruch oder einen anderen Defekt detektierten zu können, ist die Schaltung in dem gezeigten Ausführungsbeispiel so ausgelegt, das die Ausgangsspannung V_out im dargestellten geöffneten Schaltzustand des Tasters 4a am Ausgang der Platine anliegt. Der Schalter ist somit "normal geöffnet" und die Ausgangspannung V_out ist gleich der Eingangsspannung +V.

Sobald der Taster 4a auf Grund einer abgenutzten Schleifkohle betätigt wird, liegt die minimierte Spannung an dem Transistor T an, der sonach geschaltet wird. In der Folge werden die Eingangs- und die Ausgangsspannung auf das 0V Potential gezogen. Dieser Spannungsabfall dient vorliegend als Signal dafür, dass der Taster 4a betätigt wurde und dass die Schleifkohle einen entsprechenden Abnutzungsgrad aufweist.

Liegt ein anderer Defekt vor, wie beispielsweise ein Kabelbruch in der Spannungsversorgung, so wird der Kohleverschleißtester dies ebenfalls durch einen Spannungsabfall detektieren und melden. Im Umkehrschluss bedeutet das, dass eine abgenutzte Schleifkohle nicht durch einen unbemerkt defekten Kohleverschleißtester übersehen werden kann.

## Patentansprüche

1. Kohleverschleißtester zum Testen und/oder Überwachen eines Verschleißgrades von zumindest einer Schleifkohle (3a) eines Stromabnehmers (3), wobei der Kohleverschleißtester an einer Schleifleitung angeordnet oder anordenbar ist, wobei der Kohleverschleißtester mindestens ein Auslöseelement (2) und zumindest einen Signalgeber aufweist, **wobei** das mindestens eine Auslöseelement (2) relativ zur Schleifleitung verstellbar angeordnet oder anordenbar ist, wobei der Signalgeber (4a) die Verstellung des mindestens einen Auslöseelements (2) erfasst, und dass das Auslöseelement (2) und der Signalgeber (4a) miteinander in Verbindung sind, **dadurch gekennzeichnet, dass** der Kohleverschleißtester eine Anschlagsfläche (5) für den Signalgeber aufweist, wobei der Signalgeber (4a) zwischen dem Auslöseelement (2) und der Anschlagsfläche (5) angeordnet ist.

2. Kohleverschleißtester nach Anspruch 1, **dadurch gekennzeichnet, dass** das Auslöseelement (2) starr mit dem Signalgeber (4a) verbunden oder verbindbar ist.

3. Kohleverschleißtester nach Anspruch 1 oder 2, **dadurch gekennzeichnet, dass** der Signalgeber (4a) mechanisch und/oder elektro-magnetisch wirkt und bei seiner Betätigung ein Signal an eine Elektronik, einen Sensor und/oder eine Datenverarbeitung sendet.

4. Kohleverschleißtester nach Anspruch 3, **dadurch gekennzeichnet, dass** der Signalgeber (4a) ein Schalter oder ein Taster (4a) ist, der zumindest zwei gelenkig und in einem Winkel zueinander angeordnete Flügel (4a') und eine Rückstellfeder (4a") aufweist, wobei die Rückstellfeder (4a") die zwei Flügel (4a') miteinander verbindet.

5. Kohleverschleißtester nach einem der vorstehenden Ansprüche, **dadurch gekennzeichnet, dass** der Signalgeber zusammen mit einer Elektronik auf einer Platine (4) angeordnet ist, wobei die Platine an dem Auslöseelement (2), insbesondere mittels an dem Auslöseelement (2) angeordneten Haltemitteln (2d), angeordnet bzw. anordenbar ist.

6. Kohleverschleißtester nach einem der vorstehenden Ansprüche, **dadurch gekennzeichnet, dass** das Auslöseelement (2) eine Aufnahme (2a) zur Aufnahme bzw. zum Umgreifen der Schleifleitung aufweist.

7. Kohleverschleißtester nach Anspruch 6, **dadurch gekennzeichnet, dass** die Aufnahme (2a) eine Innenkontur aufweist, die zumindest abschnittsweise einer Außenkontur der Schleifleitung entspricht.

8. Kohleverschleißtester nach Anspruch 6 oder 7, **dadurch gekennzeichnet, dass** die Aufnahme (2a) einen im Wesentlichen U-förmigen Querschnitt aufweist, derart, dass das Auslöseelement (2) die Schleifleitung zumindest teilweise umgreift, wobei eine Schleiffläche der Schleifleitung frei bleibt.

9. Kohleverschleißtester nach Anspruch 7 oder 8, **dadurch gekennzeichnet, dass** die Innenkontur gerade Seitenwandungen (2c) aufweist, wobei die geraden Seitenwandungen (2c) Gleitflächen für die Außenkontur der Schleifleitung bilden.

10. Kohleverschleißtester nach einem der vorstehenden Ansprüche, **dadurch gekennzeichnet, dass** der Auslöseelement (2) an eine Schleifleitung, insbesondere nachträglich, anklipsbar, anklemmbar, aufsteckbar oder anschraubbar ist und/oder senkrecht zur Schleiffläche der Schleifkohle verschieblich an einer Schleifleitung anlagerbar bzw. angelagert ist.

11. Kohleverschleißtester nach einem der vorstehenden Ansprüche, **dadurch gekennzeichnet, dass** der Auslöseelement (2) zumindest eine Anschlagsfläche (2b) für den Stromabnehmer (3) oder einen Schleifkohlehalter (3b) oder eine an dem Stromabnehmer (3) angeordnete Anschlagsfläche (3c) aufweist.

12. Kohleverschleißtester nach Anspruch 11, **dadurch gekennzeichnet, dass** die Anschlagflächen (2b) über die Schleifleitung hinausragen, derart, dass sie in Richtung des Stromabnehmers (3) vorstehen.

13. Kohleverschleißtester nach einem der vorstehenden Ansprüche, **dadurch gekennzeichnet, dass** die Anschlagsfläche eine Platte (5) ist.

14. Kohleverschleißtester nach Anspruch 13, **dadurch gekennzeichnet, dass** die Anschlagsfläche zumindest ein Halteelement (5b) aufweist oder mit zumindest einem Halteelement (5b) verbindbar ist, mit dem die Anschlagsfläche mit der Schleifleitung, insbesondere lösbar, verbunden oder verbindbar ist.

15. Kohleverschleißtester nach einem der vorstehenden Ansprüche, **dadurch gekennzeichnet, dass** an einem Anschluss (4b') des Kohleverschleißtesters eine Ausgangsspannung (V_out) anliegt, wenn der Signalgeber (4a) in einer neutralen Position ist, und dass die Ausgangspannung (V_out) absinkt, wenn der Signalgeber (4a) betätigt wird.

16. Schleifleitung mit einem Kohleverschleißtester nach einem der vorstehenden Ansprüche.

17. Schleifleitung nach Anspruch 16, **dadurch gekennzeichnet, dass** die Schleifleitung zumindest zwei Schleifleitungsabschnitte (1a, 1b) mit jeweils einem Ende aufweist, wobei die Enden sich gegenüberliegend und miteinander fluchtend in einem gemeinsamen Auslöseelement (3) angeordnet sind.

18. Schleifleitung nach Anspruch 17, **dadurch gekennzeichnet, dass** sich die beiden Enden der Schleifleitungsabschnitte in dem Auslöseelement (3) relativ zueinander entlang ihrer Längsrichtung ausdehnen und/oder kontrahieren können.

19. Schleifleitungssystem mit zumindest einer Schleifleitung nach einem der Ansprüche 16 bis 18 und mit zumindest einem Stromabnehmer (3).

20. Schleifleitungssystem nach Anspruch 19, **dadurch gekennzeichnet, dass** der Stromabnehmer (3) einen Schleifkohlenhalter (3b) aufweist, wobei der Schleifkohlehalter (3b) eine Anschlagsfläche (3c) zur Betätigung des Kohleverschleißtesters aufweist.

21. Schleifleitungssystem nach Anspruch 20, **dadurch gekennzeichnet, dass** die Anschlagsfläche (3c) des Schleifkohlehalters (3b) von einer Anschlagsfläche (2b) des Kohleverschleißtesters entfernt ist, wenn die Schleifkohle (3a) einen bestimmten Verschleißgrad noch nicht erreicht hat, und dass die Anschlagsfläche (3c) des Schleifkohlenhalters (3b) mit der Anschlagsfläche (2b) des Kohleverschleißtesters in Kontakt kommt, wenn die Schleifkohle (3a) einen bestimmten Abnutzungsgrad überschreitet.

22. Schleifleitungssystem nach einem der Ansprüche 19 bis 21, **dadurch gekennzeichnet, dass** das Schleifleitungssystem mehr als eine Schleifleitung aufweist, wobei an mehr als einer Schleifleitung, insbesondere an jede Schleifleitung, ein Auslöseelement (2) angeordnet ist.
